(19) Europäisches Patentamt
European Patent Office
Office européen des brevets

(11) **EP 1 310 935 B1**

(12) **EUROPEAN PATENT SPECIFICATION**

(45) Date of publication and mention
of the grant of the patent:
**25.08.2010 Bulletin 2010/34**

(51) Int Cl.:
***G09G 3/22*** *(2006.01)*

(21) Application number: **02024752.4**

(22) Date of filing: **06.11.2002**

(54) **Control apparatus and method for image display**

Verfahren und Einrichtung zur Steuerung einer Bildanzeige

Méthode et appareil de commande d'affichage d'image

(84) Designated Contracting States:
**DE FR GB IT NL**

(30) Priority: **08.11.2001 JP 2001343250**

(43) Date of publication of application:
**14.05.2003 Bulletin 2003/20**

(73) Proprietor: **CANON KABUSHIKI KAISHA**
**Ohta-ku**
**Tokyo (JP)**

(72) Inventors:
• **Mori, Makiko**
**Ohta-ku,**
**Tokyo (JP)**

• **Ando, Muneki**
**Ohta-ku,**
**Tokyo (JP)**

(74) Representative: **TBK-Patent**
**Bavariaring 4-6**
**80336 München (DE)**

(56) References cited:
**EP-A- 0 656 726**   **EP-A- 0 965 974**
**JP-A- 2000 250 463**   **JP-A- 2000 330 505**
**US-A1- 2001 000 217**

**Description**

BACKGROUND OF THE INVENTION

Field of the Invention

The present invention relates to an image display and, more particularly, to a control apparatus and method for an image display having an ABL (Auto-Brightness Limitation circuit).

Related Background Art

Some image displays comprise ABLs (Auto-Brightness Limitation circuits) for limiting the display brightness. The ABL generally suppresses and controls the average display brightness of the screen so as not to excessively increase it for the purpose of suppression of power consumption or the like. The control response speed is preferably higher in terms of suppression of power consumption. However, an excessively high speed makes the display brightness of the screen unstable when the average brightness changes between frames (fields) of the same scene. The display brightness is generally controlled with a response slowed down with a given time constant.

With such a slow response, control is performed with a delay after the image brightness changes when, for example, the image brightness greatly changes within a short period upon a scene changeover. No control is done immediately when the image brightness changes greatly. The image brightness gradually changes with a delay. Such a change of the brightness gives the image observer a visual sense of incongruity or incompatibility.

To solve this problem, the present applicant has proposed an image display control apparatus as disclosed in Japanese Laid-Open Gazette No. 2000-250463. In this Gazette, there is disclosed a control apparatus and method for an image display that can suppress any increase in power consumption and heat generation on the display surface by controlling the display brightness in response to a change of a video signal, and also prevent any visual sense of incongruity or incompatibility by control.

In this Gazette, in order to detect the frame correlation, the sum of the absolute values of differences between frames of a color difference signal for each block prepared by dividing the display area must be calculated, resulting in a large-scale processing circuit. In another embodiment of this Gazette, the average emission current is detected as a measure of the average brightness of the display image, an the brightness of the display is suppressed based on the detected average emission current.

The present invention has been made to overcome the conventional drawbacks, and has as its object to provide a control apparatus and method for an image display that can suppress any increase in power consumption of the image display and heat generation on the display surface by controlling the display brightness in response to a change of a video signal, prevent any visual sense of incongruity or incompatibility by control, and suppress any increase in circuit scale.

EP-A-0 965 974 describes a method of and a system for controlling brightness of a picture displayed on a plasma display. Herein, it is determined whether a video signal to be fed to the plasma display panel is a signal indicating a stationary picture. In case this video signal is determined to be a signal indicating a stationary picture, the brightness of a picture displayed on the plasma display panel is reduced.

JP 2000 330505 A describes a control device for controlling a luminance level of a display device and a luminance level control method. Herein, the display luminance level control is performed when a scene change of an inputted video signal is detected.

SUMMARY OF THE INVENTION

According to the present invention, an image display control apparatus is provided as defined in claim 1, and an image display control method is provided as defined in claim 8.

BRIEF DESCRIPTION OF THE DRAWINGS

Fig. 1 is a block diagram showing the arrangement of the first example;
Fig. 2 is a data flow chart showing a processing flow;
Fig. 3 is a flow chart for explaining processing of an ABL calculation unit;
Fig. 4A is a graph showing an example of changes of the average brightness;
Fig. 4B is a graph showing an example of changes of the differential of the average brightness;

Fig. 4C is a graph showing an example of a brightness suppression coefficient;

Fig. 4D is a graph showing an example of the average brightness displayed on a display panel;

Fig. 4E is a graph showing the second order differential of the average brightness;

Fig. 5A is a view showing an example of the layout of a display area in a multiwindow mode according to the fourth example;

Fig. 5B is a view showing an example of the layout of the display area in another mode according to the fourth example;

Fig. 6 is a block diagram showing the arrangement of the fifth example;

Fig. 7 is a block diagram showing the arrangement of the seventh example;

Fig. 8 is a graph showing the typical characteristic of the brightness of the display panel used in the embodiment to the drive voltage;

Fig. 9 is a block diagram showing the arrangement of the eighth example;

Fig. 10 is a graph showing the typical characteristic of the brightness of the display panel used in the example to the acceleration voltage; and

Fig. 11 is a block diagram showing the arrangement of the ninth embodiment

DETAILED DESCRIPTION OF THE EXAMPLES AND THE EMBODIMENT

(First Example)

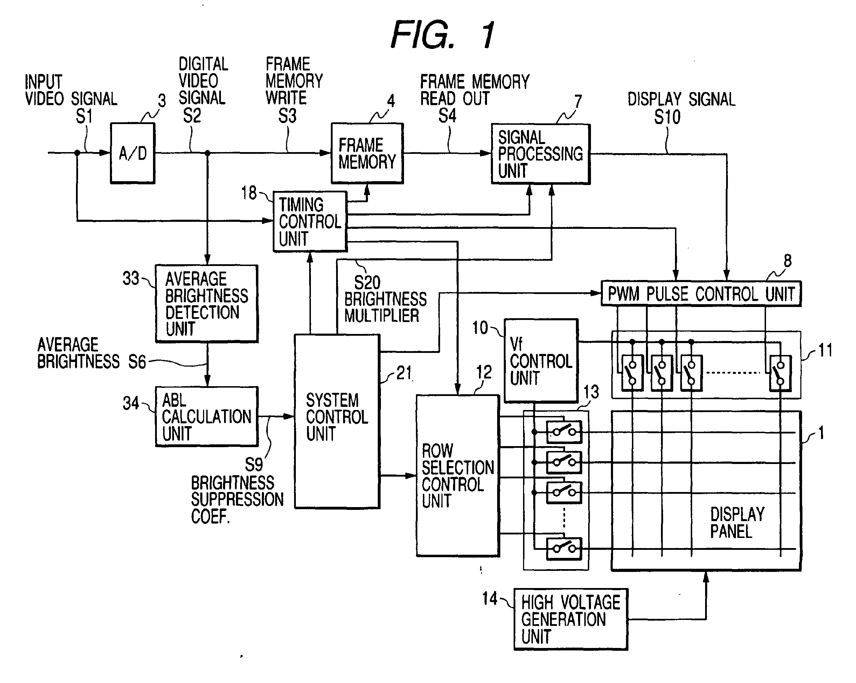

Fig. 1 shows the arrangement of an image display apparatus according to the first example. In this example, a display panel in Fig, is a display panel in which a multi-electron source constituted by arranging many electron sources, e.g., cold cathode devices on a substrate, and an image-forming member for forming an image by electron irradiation are arranged to face each other. Electron-emitting devices are wired in a simple matrix by row- and column-directional wiring electrodes. Electrons emitted by a device selected by a row/column electrode bias are accelerated by a high voltage and impinge against the phosphor, thereby emitting light. The structure and manufacturing method of the panel are disclosed in detail in Japanese Laid-Open Gazette No. 2000-250463 described above.

An A/D converter 3 converts an input video signal into a digital signal. A frame memory 4 stores video signals of one frame. A signal processing unit 7 performs, for a video signal, processing such as brightness/chromaticity adjustment, gamma processing, edge emphasis processing, and character information synthesis.

A PWM pulse control unit 8 converts a display signal into a drive signal conforming to the display panel 1. A Vf control unit 10 controls a voltage for driving devices arranged on the display panel 1. A column wiring switch unit 11 is formed from switching means such as transistors, and applies a drive output from the Vf control unit 10 to a panel column electrode only for a PWM pulse period output from the PWM pulse control unit 8 every horizontal period (row selection period). A row selection control unit 12 generates a row selection pulse for driving devices on the display panel 1. A row wiring switch unit 13 is formed from switching means such as transistors, and outputs to the display panel 1 a drive output from the Vf control unit 10 that corresponds to a row selection pulse output from the row selection control unit 12. A high voltage generation unit 14 generates an acceleration voltage for accelerating electrons in order to make electrons emitted by electron-emitting devices arranged on the display panel 1 impinge against the phosphor.

A timing control unit 18 outputs various timing signals for the operations of blocks. A system control unit 21 controls the operations of blocks. An average brightness detection unit 33 calculates an average brightness S6 of a frame, and corresponds to an average brightness information means described in claims of the present invention. An ABL calculation unit 34 calculates an ABL brightness suppression coefficient S9 on the basis of the average brightness S6, and corresponds to a detection means described in claims of the present invention. Note that a brightness suppression means according to the first example is implemented by the system control unit and signal processing unit.

A signal S1 is an input video signal. A signal S2 is a digitized video signal. A signal S3 is a video signal to be written in the frame memory. A signal S4 is a video signal read out from the frame memory. The signal S6 is the average brightness of a frame calculated by the average brightness detection unit. The signal S9 is an ABL brightness suppression coefficient calculated by the ABL calculation unit 34. A signal S10 is a display signal processed by the signal processing unit.

In normal image display operation, an input video signal S1 is digitized into a digital video signal S2 with a necessary number of gray levels by the A/D converter 3. The digitized video signal S2 is temporarily stored in the frame memory 4, and then sent to the signal processing unit 7. A display signal S10 having undergone video signal brightness/chromaticity adjustment, gamma processing, edge emphasis processing, character information synthesis, and the like by the signal processing unit 7 is serial/parallel-converted by the PWM pulse control unit 8 every horizontal period (row selection period). The resultant signal is PWM-modulated for each column. The PWM-modulated pulse is output to the column drive output SW unit 11.

Rows of the display panel 1 are selected by outputting selection pulses to the row drive output SW unit 13 on the basis of signals obtained by sequentially shifting a start pulse synchronized with the start of the effective vertical display period every row selection period.

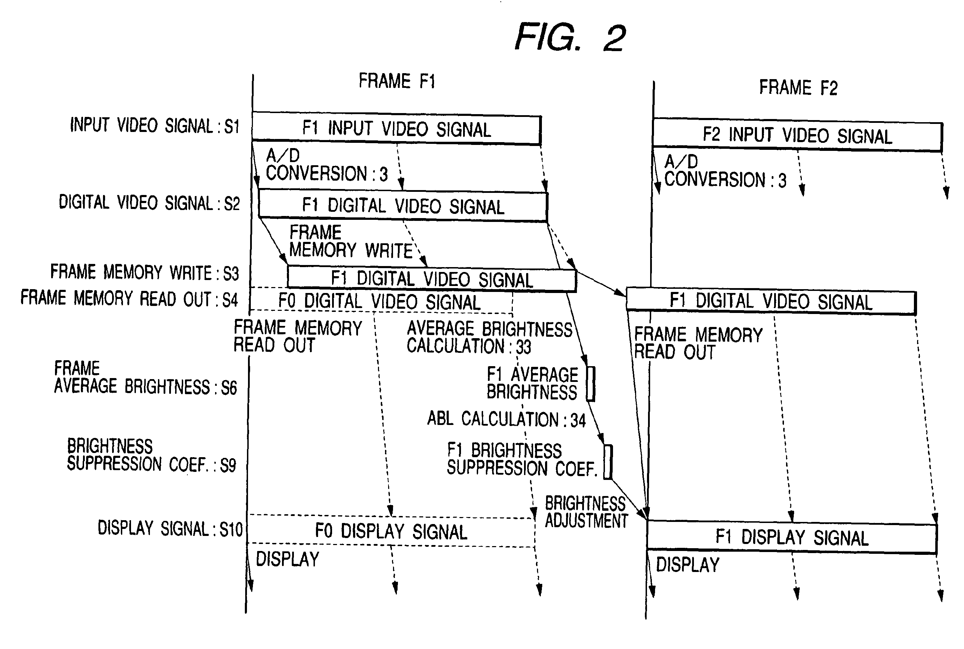

Fig. 2 is a data flow chart showing a flow of data and corresponding processing steps. Processing will be explained with reference to Figs. 1 and 2.

An input video signal S1 is digitized into a digital video signal S2 by the A/D converter 3. The digital video signal S2 is written in the frame memory 4 (S3). At the same time, the average brightness detection unit 33 calculates the average brightness S6 of a frame (field).

The average brightness S6 is input to the ABL calculation unit 34, which calculates a brightness suppression coefficient S9 for adjusting the emission brightness of the display panel 1 in accordance with the average brightness of the image. This coefficient is so calculated as to have such a relationship that the emission brightness of the display panel 1 is decreased for a higher average brightness of the image therein a predetermined referential level.

To reduce the visual influence of the image brightness caused by an abrupt change, the brightness suppression coefficient is gradually changed with a given time constant. The time constant is changed in accordance with the presence (occurrence) / absence (nonoccurrence) of an image scene changeover. If the image scene is changed over, the time constant is set small so as to quickly change the brightness suppression coefficient. While, as long as the same image scene continues, the time constant is set large so as to slowly change the brightness suppression coefficient.

The ABL brightness suppression coefficient S9 is sent to the system control unit 21, and set as the brightness multiplier of the signal processing unit 7. In accordance with the brightness multiplier, the signal processing unit 7 executes arithmetic processing to a video signal S4 read out from the frame memory, generating a display signal S10.

The display signal S10 is converted by the PWM pulse control unit 8 into a drive signal for driving the display panel 1. The drive signal drives the display panel 1 to display an image.

A method of determining the emission brightness suppression coefficient of the display panel 1 will be exemplified.

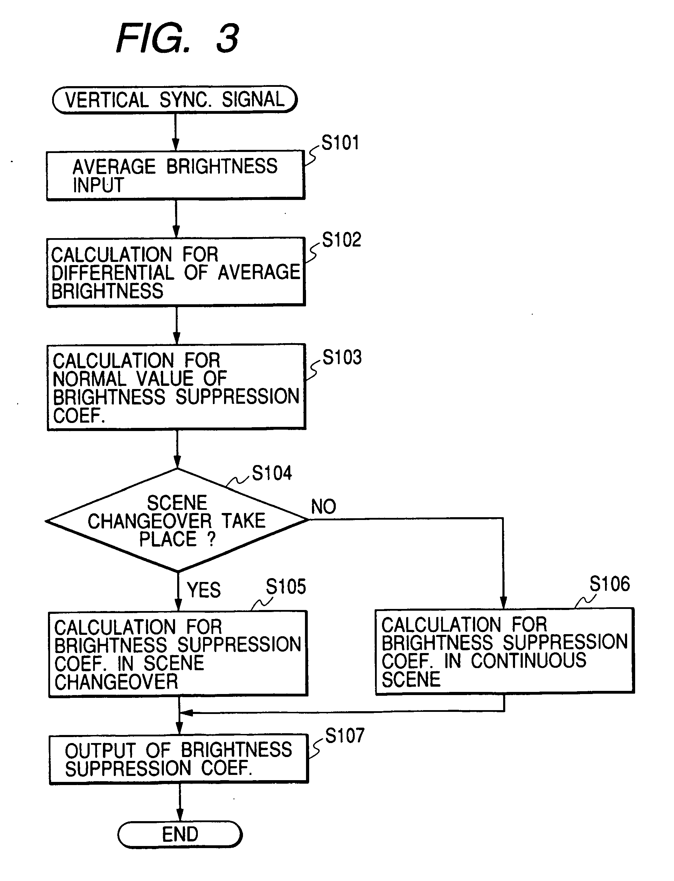

Fig. 3 is a flow chart showing calculation processing of the ABL calculation unit 34. This processing is activated by a vertical sync signal supplied from the timing control unit 18, and ends within the vertical blanking period.

The average brightness S6 of an input image calculated by the average brightness detection unit 33 is input in step S101 of Fig. 3. In step S102, the difference between preceding and current frames. Letting B(t) be the average brightness of the current frame, and B(t-1) be the average brightness of the preceding frame, a difference $\Delta$B(t) of the average brightness in the current frame is given by

$$\Delta B(t) = B(t-1) - B(t)$$

$$...(1)$$

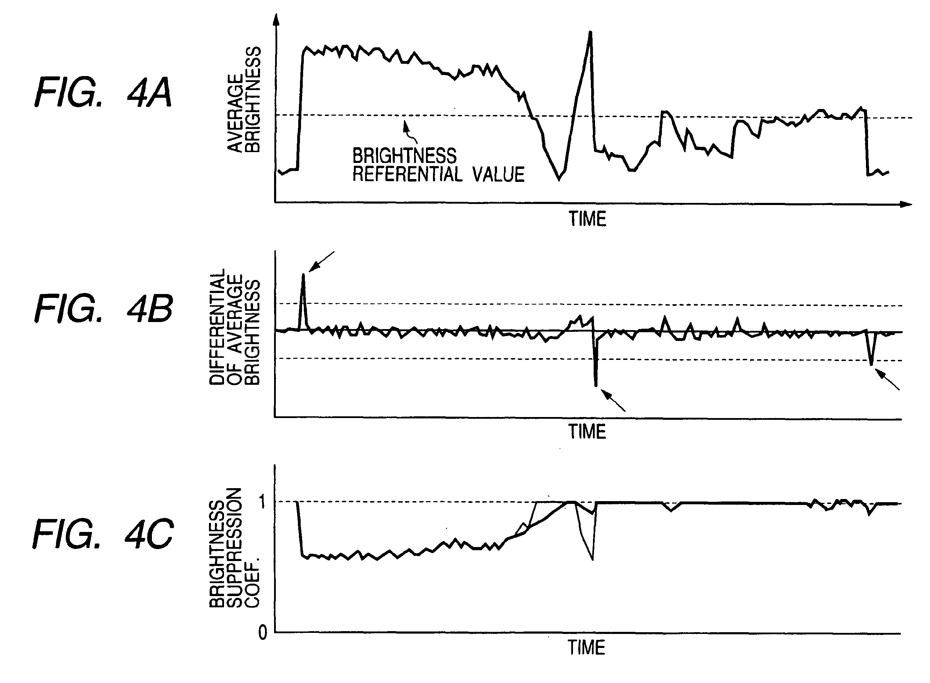

Fig. 4A is a graph showing an example of changes of the average brightness S6 of one frame (field). The broken line indicates a brightness referential value which is the upper limit target of the display average brightness and is set in advance. Fig. 4B is a graph showing changes of the differential of the average brightness S6 obtained from the example of Fig. 4A using equation (1).

In step S103 of Fig. 3, the normal value of the brightness suppression coefficient is calculated. Letting Bm be the brightness referential value, a normal value K(t) of the brightness suppression coefficient in the current frame is given by

$$K(t) = Bm/B(t) \qquad (for \ B(t) > Bm)$$

$$K(t) = 1 \qquad (for \ B(t) \leqq Bm)$$

$$...(2)$$

In step S104 of Fig. 3, whether a scene changeover has taken place is checked. This determination uses the differential of the average brightness calculated in step S102. If the absolute value of the differential of the average brightness is equal to or larger than a preset threshold, a scene changeover is determined to have taken place, and the flow branches to step S105; if No, no scene changeover is determined to have occurred, and the flow shifts to step S106.

Broken lines shown in Fig. 4B represent thresholds for determining a scene changeover, and two lines are drawn for determining a scene changeover by absolute values. In Fig. 4B, a scene changeover is determined to have taken place at three portions indicated by arrows.

If a scene changeover has taken place, a brightness suppression coefficient to be actually output to the system control unit 21 is calculated in step S105. In an image scene changeover, the time constant is set small so as to quickly change the brightness suppression coefficient. For example, as represented by equation (3), the normal value K(t) of the brightness suppression coefficient calculated in step S103 is directly employed as a brightness suppression coefficient K'(t) of the current frame:

$$K'(t) = K(t)$$
$$...(3)$$

Alternatively, as represented by equation (4), a gain G ($0 \leqq G \leqq 1$) in a scene changeover may be determined to calculate

$$K'(t) = (K(t) - K'(t-1))*G + K'(t-1)$$
$$...(4)$$

where K'(t-1) is the brightness suppression coefficient calculated for the preceding frame.
Fig. 4C shows the graph of the brightness suppression coefficient corresponding to Fig. 4A. The solid line indicates the normal value of the brightness suppression coefficient; and the thick broken line, the brightness suppression coefficient to be actually output.
If No in step S104, a brightness suppression coefficient to be actually output to the system control unit 21 is calculated in step S106. In a continuous image scene (same scene), the time constant is set large so as to suppress the change amount of the brightness suppression coefficient small. More specifically, as represented in equation (5), a minimum step Ks of the brightness suppression coefficient is changed to make the brightness suppression coefficient gradually follow the normal value:

$$K'(t) = K'(t-1) + Ks \qquad (for\ K(t) > K'(t-1))$$
$$K'(t) = K'(t-1) - Ks \qquad (for\ K(t) \leqq K'(t-1))$$
$$...(5)$$

Alternatively, a gain g ($0 \leqq g \leqq 1$) of a continuous scene may be determined to calculate

$$K'(t) = (K(t) - K'(t-1))*g + K'(t-1)$$
$$...(6)$$

At this time, g is smaller than the gain G for a scene changeover.
The branches merge in step S107, and the brightness suppression coefficient S9 is output to the system control unit 21.

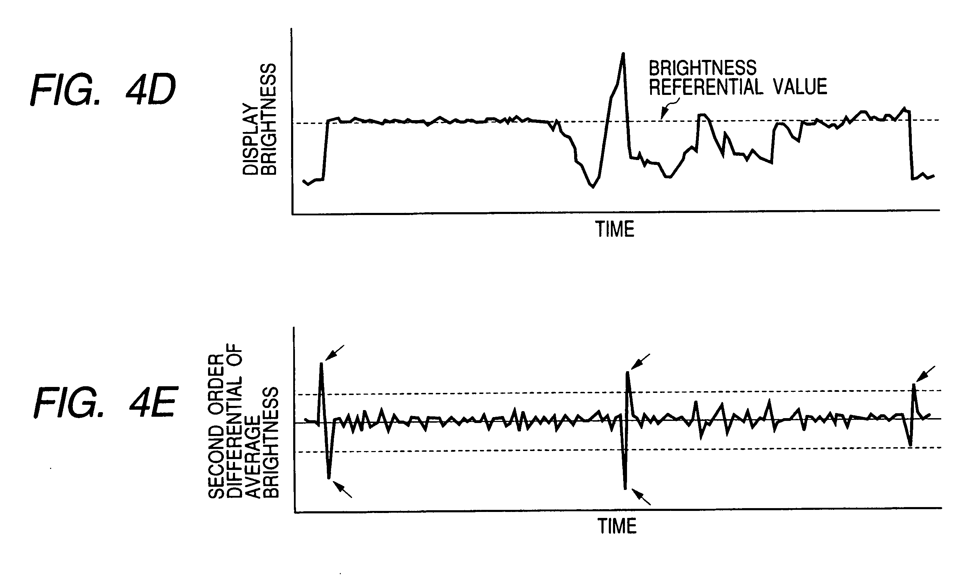

Fig. 4D shows the graph of the resultant average brightness displayed on the display panel 1. At a portion where the brightness abruptly increases in a continuous scene, the brightness exceeds the brightness referential value. At remaining portions, the brightness can be controlled to be equal to or lower than the brightness referential value.
In this manner, the brightness suppression coefficient is calculated, and the display brightness is set by the system control unit 21. If the average brightness S6 is high, the brightness suppression coefficient S9 becomes low; if the average brightness S6 is low, the brightness suppression coefficient S9 becomes high. Thus, the brightness is suppressed to a predetermined value by the ABL.
When the change amount of the average brightness S6 between a frame of interest and the immediately preceding frame is small, a change of the brightness suppression coefficient is also controlled small, suppressing a change of the brightness by the ABL small. To the contrary, if the change amount of the average brightness S6 between a frame of interest and the immediately preceding frame is large, the brightness suppression coefficient is quickly controlled, and a rapid brightness convergence by the ABL becomes possible.

The first example has exemplified a display using a surface conduction electron-emitting device. However, this example can be practiced regardless of the structure of the display panel itself such as a CRT, PDP, electroluminescence device.

(Second Example)

In the first example, whether a scene changeover has taken place is determined based on the difference $\Delta B$ (t) between the current frame and the proceeding frame for the average brightness S6. In the second example, whether a scene changeover has taken place is determined based on the second order differential of the average brightness S6. If the absolute value of the second order differential of the average brightness is equal to or larger than a preset threshold, a scene changeover is determined to have taken place. If the absolute value is smaller than the threshold, no scene changeover is determined to have taken place. The remaining processing is the same as that of the first example, and the flow chart of Fig. 3 also applies to the second example except that the second order differential replaces the differential.

Fig. 4E shows the graph of the second order differential of the average brightness corresponding to Fig. 4A. Broken lines represent thresholds for determining a scene changeover, and two lines are drawn for determining a scene changeover by absolute values. In Fig. 4E, a scene changeover is determined to have taken place at five portions indicated by arrows.

The second order differential does not peak when the average brightness changes smoothly, but peaks positively and negatively when the average brightness changes as if a still image changed over (the average brightness keeps a given value for several frames, then abruptly changes to a different value, and keeps at this value for several frames). For this reason, a positive or negative peak may be detected, instead of evaluating the average brightness by an absolute value

(Third Example)

In the first and second examples, average brightness signals S6r, S6g, and S6b may be independently calculated for the respective colors of three primary color signals (R, G, and B) as component signals of the average brightness S6 when the average brightness detection unit 33 calculates the average brightness S6. The ABL calculation unit calculates differentials or second order differentials for the average brightness signals S6r, S6g, and S6b of the respective colors. If even one color exceeds a threshold for determining a scene changeover, a scene changeover is determined to have occurred.

When an input signal is made up of a luminance signal (Y) and color difference signals (Cb, Cr, and the like), average brightness signals Sy, Scb, and Scr are independently calculated for these component signals.

This enables detecting a scene changeover even when only the color changes while the entire brightness is kept uncharged.

(Fourth Example)

In the fourth example, the display area of a display panel 1 is divided into a plurality of areas, and an average brightness is calculated for each area. Scene changeover detection is executed for each area, and the results are comprehensively determined to detect a scene changeover for the whole display area.

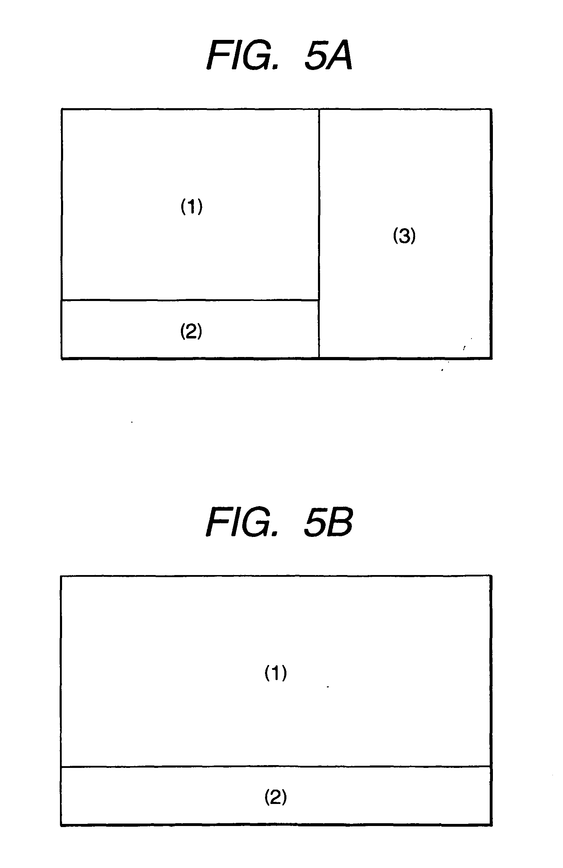

Fig. 5A shows an example of the layout of a display area in a multiwindow mode. In this example, area (1) corresponds to television broadcasting; area (2), data broadcasting; and area (3), a game window. An average brightness detection unit 33 detects an average brightness for each area on the basis of a timing signal output from a timing control unit 18, and sends the average brightness to an ABL calculation unit 34. The ABL calculation unit 34 performs scene changeover detection for each area by the above-described method. If a scene changeover is determined in two or more areas, the scene changeover is determined to have occurred in the entire display area, and the ABL calculation unit 34 performs ABL processing described in detail in the first example.

Fig. 5B shows the layout of a display area in a movie mode. A lower portion of the screen where subtitles are displayed is ensured as area (2). In this mode, scene changeover detection of area (1) is overall scene changeover detection, and a scene changeover in area (2) is ignored. With this setting, a subtitle changeover is not erroneously recognized as a scene changeover.

Also in a general mode, an area where a telop is inserted or OSD (On-Screen Display) is frequently displayed can be so set as not to be used for the average brightness for scene changeover detection.

This can prevent any visual disturbance of greatly changing the brightness suppression coefficient by a scene changeover in another region though a scene in an area of interest does not change.

(Fifth Example)

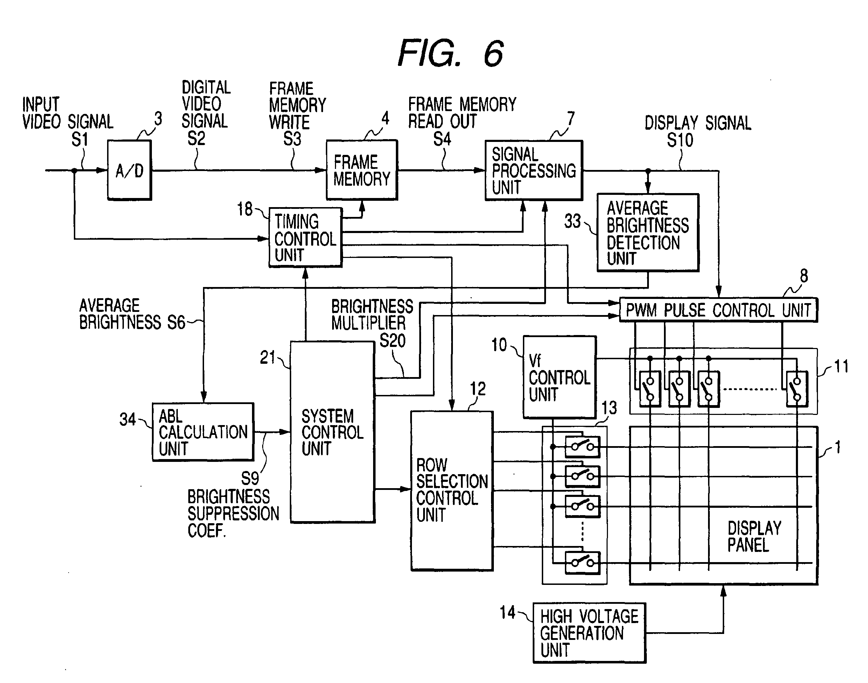

Fig. 6 shows the arrangement of an image display according to the fifth example. In Fig. 5, the same reference numerals as in Fig. 1 denote the same parts, and a description thereof will be omitted.

In the first example, the average brightness S6 is calculated from the digital video signal S2 immediately after the input signal S1 is digitized by the A/D converter 3. In the fifth example, the average brightness is calculated from the display signal S10 having undergone brightness/chromaticity adjustment, gamma processing, edge emphasis processing, and character information synthesis by a signal processing unit 7, and input to an ABL calculation unit 34.

The fifth example adopts feedback control, and the normal value K(t) of the brightness suppression coefficient is given by

$$K(t) = MIN(Bm*K'(t-1)/B(t), 1)$$

$$...(7)$$

where B(t) is the frame average value of the display signal S10 output from the signal processing unit 7, and MIN(a,b) is a function of feeding back a smaller one of a and b.

The remaining arrangement is the same as that of the first or second example.

In a device having a linear emission characteristic to a display video signal, inverse $\gamma$ conversion with respect to the $\gamma$ characteristic of a CRT must be performed within the signal processing unit 7. Through the inverse $\gamma$ conversion, the average brightness level of a display signal actually supplied to the display panel becomes much lower than that of an input video signal. Calculating the average brightness level after inverse $\gamma$ conversion from the average brightness level of an input video signal increases an error. The fifth example calculates an average brightness after inverse $\gamma$ conversion processing, and can realize accurate control.

The ratio of the display area of OSD (On-Screen Display) to the display area of the device increases to a non-negligible degree in ABL. However, the fifth example calculates an average brightness from an actual display signal also considering OSD, and can achieve accurate control

(Sixth Example)

Depending on the characteristics of an image display, a high average brightness of the display screen increases power consumption, applying a load to a high voltage generation unit 14. The ABL response speed is desirably high, but the response speed need not be high for a low brightness. In this case, the time constant is set to different values between high and low brightness suppression coefficients, which can also be realized by the arrangements of the above-described examples.

In the sixth example, the gains G and g in equations (4) and (6) are switched depending on the situation. Let Gu and gu be gains for increasing the brightness suppression coefficient, and Gd and gd be gains for decreasing the brightness suppression coefficient. Equation (8) is applied depending on the relationship between the normal value K(t) of the brightness suppression coefficient of the current frame and the brightness suppression coefficient K'(t-1) output for the preceding frame that is calculated by equation (2) or (7):

$$G = Gu, \ g = gu \quad (for \ K(t) > K'(t-1))$$

$$G = Gd, \ g = gd \quad (for \ K(t) \leqq K'(t-1))$$

$$...(8)$$

Based on equation (8), the brightness suppression coefficient K'(t) of the current frame is calculated using equations (4) and (6), and output to a system control unit 21.

(Seventh Example)

In the above examples, the brightness component of a video signal is changed as a means for controlling the emission brightness of the display panel. As the emission brightness control means, another method can also be employed.

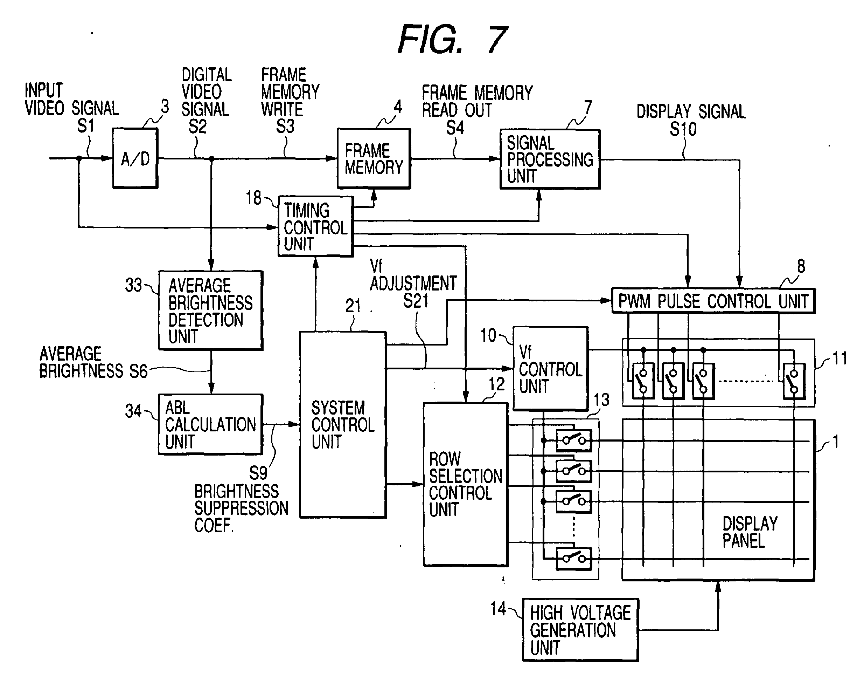

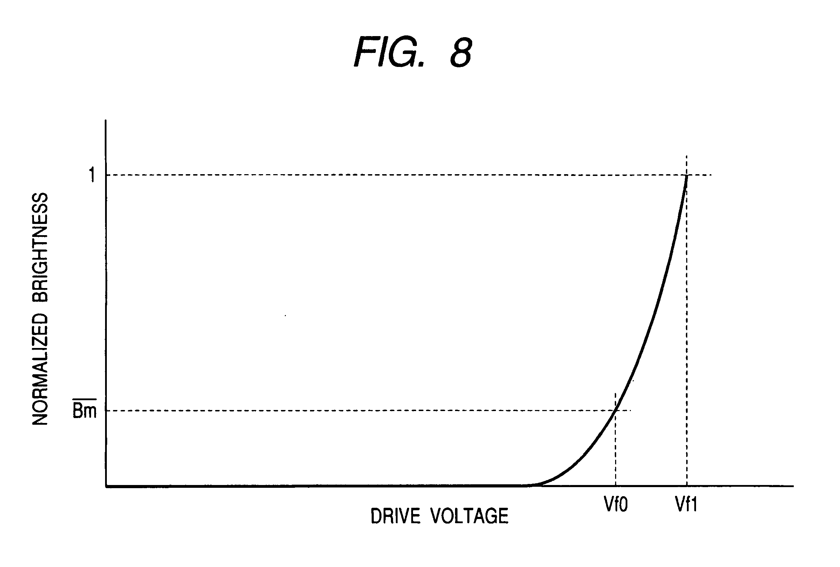

In the seventh example, the emission brightness is controlled by controlling a voltage which is output from a Vf control unit 10 and drives electron-emitting devices on a display panel 1. Fig. 7 shows the arrangement of a display according to the seventh example. A system control unit 21 sets the brightness suppression coefficient S9 for the Vf control unit 10. The Vf control unit 10 uses the brightness suppression coefficient S9 as a voltage adjustment value for driving electron-emitting devices, and outputs a voltage for driving the display panel 1. If the device voltage application time is constant, the screen brightness changes depending on a device voltage Vf, as shown in Fig. 8. A drive voltage Vf(t) is determined using the brightness suppression coefficient K' (t) calculated by equations (3) to (7).

As the determination method, for example, a table may be looked up, or the drive voltage may be calculated using an equation. In Fig. 8, the normalized brightness reference is given by

$$\overline{Bm}$$

Then, the drive voltage used falls within a range of Vf0 to Vf1. By linearly approximating this range, Vf(t) is given by

$$Vf(t) = K'(t) - \overline{Bm} * (Vf1 - Vf0)/(1 - \overline{Bm}) + Vf0$$

$$...(9)$$

The voltage range in Fig. 8 may be approximated not only by linear approximation but also by a polygonal line or a higher order equation.

With this control, the brightness can be controlled by changing a voltage applied to a row to be selected. The brightness need not be adjusted for each pixel, simplifying control.

The brightness suppression means in the seventh example is implemented by the system control unit and Vf control unit.

(Eighth Example)

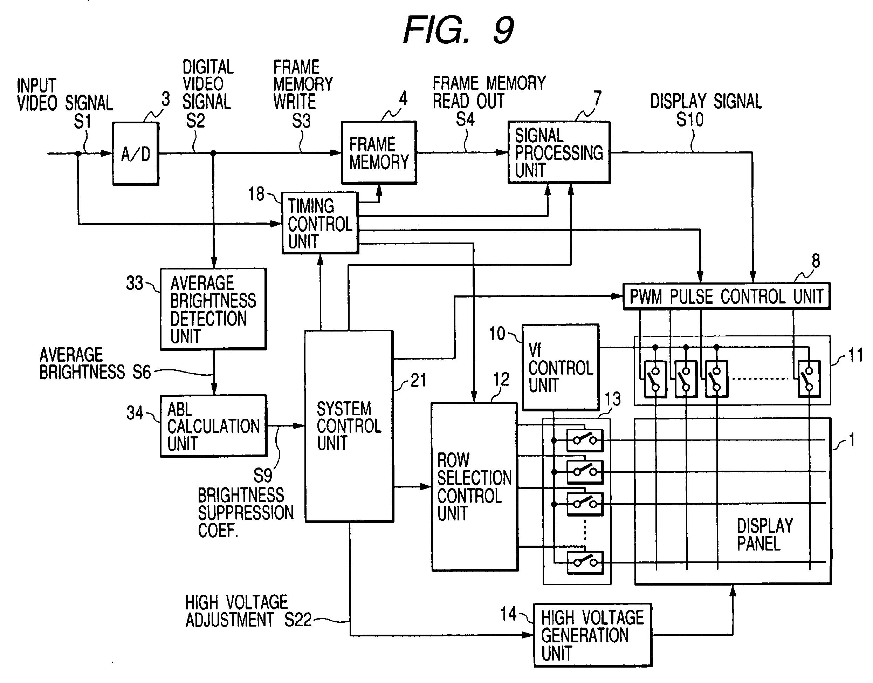

An emission brightness control means for controlling a voltage which is output from a high voltage generation unit 14 and accelerates electrons emitted by electron-emitting devices on a display panel 1 can also be implemented by the same arrangement. Fig. 9 shows the arrangement of the eighth example.

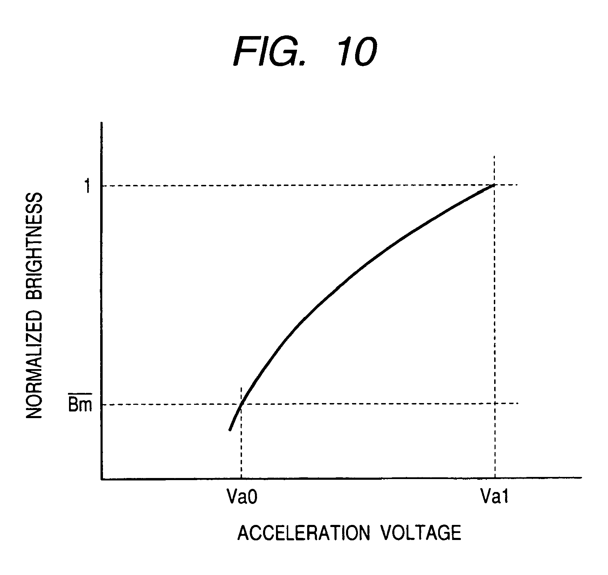

A system control unit 21 sets the brightness suppression coefficient S9 for the high voltage generation unit 14. The high voltage generation unit 14 uses the brightness suppression coefficient S9 as an acceleration voltage adjustment value for accelerating electrons, and outputs an acceleration voltage. Energy applied to the phosphor is controlled by the electron acceleration voltage, and the emission brightness is determined by the energy applied to the phosphor. If the device voltage application time is constant, the screen brightness changes depending on an acceleration voltage Va, as shown in Fig. 10. An acceleration voltage Va(t) can be determined using the brightness suppression coefficient K'(t), as described for the drive voltage Vf in the seventh example.

This method can also be applied to a display using a CRT which accelerates emitted electrons.

The brightness suppression means in the eighth embodiment is implemented by the system control unit 21 and high voltage generation unit 14.

(Embodiment)

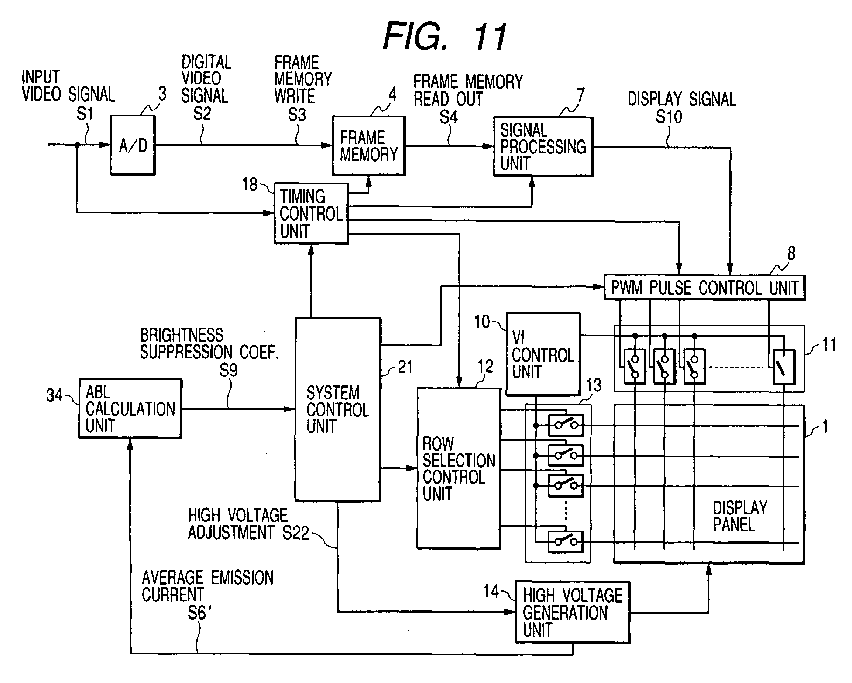

An average value S6' of an emission current supplied from a high voltage generation unit 14 for electron-emitting devices may be detected instead of the average brightness S6. Fig. 11 shows the arrangement in this case. The high voltage generation unit 14 incorporates an emission current detection unit which detects an average current supplied to the display panel 1, and outputs the average emission current S6' to an ABL calculation unit 34. This arrangement is a feedback system, which can be implemented by using the same arrangement and equations except the average brightness detection unit 33 as those of the fifth example, and replacing the average brightness S6 by the average emission current S6'.

According to the embodiment, the brightness is measured from a current actually emitted in the display panel 1. This embodiment can effectively achieve the purpose of suppressing any increase in display power and heat generation.

The brightness information means in the embodiment is implemented by the emission current detection unit in the high voltage generation unit 14.

In the above embodiments, the present invention is applied to a flat emission type image display which forms an image by irradiating the phosphor with an electron beam emitted by a plurality of electron-emitting devices arranged in a matrix. The present invention can also be applied by the same method as the first embodiment to another self-emission type image display such as a CRT, PDP, or electroluminescence device.

As has been described above, the present invention can suppress any increase in power consumption and heat generation on the display surface without any visual sense of incompatibility by controlling the display brightness in accordance with a display video signal without enlarging the circuit scale so as to prevent the average brightness of the entire display surface from increasing to a given value or more.

**Claims**

1. An image display control apparatus comprising:

   brightness information means (14) for detecting an average emission current supplied to a display panel (1) as a measure of an average brightness of a display image; and
   detection means (34) for detecting an image scene changeover; and
   brightness suppression means (7, 14, 21, 34) which is adapted to suppress the display brightness in response to the average emission and detection of a scene changeover,
   said brightness suppression means being adapted to perform control so as to slowly change the display brightness when no scene changeover is detected, and to perform control so as to change the display brightness more quickly when a scene changeover is detected than when no scene changeover is detected, and
   said brightness suppression means being adapted to set a suppression degree for the display brightness to a low value if the average brightness of the display image is high, and to set the suppression degree for the display brightness to a high value if the average brightness of the display image is low,
   **characterized by**:

      said detection means (34) for detecting an image scene changeover being adapted to detect said image scene changeover on the basis of a change amount of the average emission current.

2. An apparatus according to claim 1, wherein said detection means is adapted to detect the scene changeover on the basis of a difference between an average brightness of a frame of interest and an average brightness of an immediately preceding frame.

3. A display apparatus comprising an image display control apparatus according to claim 1, and the display panel which comprises a plurality of electron-emitting devices arranged in a matrix via column wiring and row wiring, and is adapted to display an image by irradiating phosphor with an electron beam emitted by the electron-emitting devices.

4. An apparatus according to claim 1, wherein said brightness suppression means is adapted to suppress the brightness by changing a brightness component of a video signal.

5. An apparatus according to claim 1, wherein said brightness suppression means is adapted to suppress the brightness by changing a drive voltage of electron-emitting devices of the display panel.

6. An apparatus according to claim 1, wherein said brightness suppression means is adapted to suppress the brightness by changing an acceleration voltage for accelerating electrons emitted by electron-emitting devices of the display panel.

7. An apparatus according to claim 3, wherein the electron-emitting devices are surface conduction electron-emitting devices.

8. An image display control method comprising:

detecting an average emission current supplied to a display panel (1) as a measure of an average brightness of a display image;

detecting a scene changeover;

suppressing the display brightness in

response to the average emission current and detection of the scene changeover,

wherein when no scene changeover is detected, the display brightness is so controlled as to change slowly, and when the scene changeover is detected, the display brightness is so controlled as to change more quickly than when no scene changeover is detected,

and wherein a suppression degree for the display brightness is set to a low value if the average brightness of the display image is high, and is set to a high value if the average brightness of the display image is low;

**characterized by** said scene changeover being detected on the basis of a change amount of the average emission current.

**Patentansprüche**

1. Bildanzeigesteuervorrichtung mit:

einer Helligkeitsinformationeneinrichtung (14) zum Erfassen eines Durchschnittsemissionsstroms, der einem Anzeigefeld (1) zugeführt ist, als Maß einer Durchschnittshelligkeit eines Anzeigebilds; und

einer Erfassungseinrichtung (34) zum Erfassen eines Bildszeneübergangs; und

einer Helligkeitsunterdrückungseinrichtung (7, 14, 21, 34), welche angepasst ist, um die Anzeigehelligkeit im Ansprechen auf die Durchschnittsemission und Erfassung eines Szeneübergangs zu unterdrücken,

wobei die Helligkeitsunterdrückungseinrichtung angepasst ist, um eine Steuerung so durchzuführen, um die Anzeigehelligkeit langsam zu ändern, wenn kein Szeneübergang erfasst ist, und um eine Steuerung so durchzuführen, um die Anzeigehelligkeit schneller zu ändern, wenn ein Szeneübergang erfasst ist, als wenn kein Szeneübergang erfasst ist, und

wobei die Helligkeitsunterdrückungseinrichtung angepasst ist, um einen Unterdrückungsgrad für die Anzeigehelligkeit auf einen niedrigen Wert einzustellen, falls die Durchschnittshelligkeit des Anzeigebilds hoch ist, und um den Unterdrückungsgrad für die Anzeigehelligkeit auf einen hohen Wert einzustellen, falls die Durchschnittshelligkeit des Anzeigebilds niedrig ist,

**dadurch gekennzeichnet, dass**

die Erfassungseinrichtung (34) zum Erfassen eines Bildszeneübergangs angepasst ist, um den Bildszeneübergang auf der Basis eines Änderungsbetrags des Durchschnittsemissionsstroms zu erfassen.

2. Vorrichtung nach Anspruch 1, wobei die Erfassungseinrichtung angepasst ist, um den Szeneübergang auf der Basis einer Differenz zwischen einer Durchschnittshelligkeit eines Rahmens von Interesse und einer Durchschnittshelligkeit eines unmittelbar vorhergehenden Rahmens zu erfassen.

3. Anzeigevorrichtung mit einer Bildanzeigesteuervorrichtung nach Anspruch 1 und dem Anzeigefeld, welches eine Vielzahl von Elektronen-emittierenden Einrichtungen aufweist, die in einer Matrix über Spaltenverdrahtung und Zeilenverdrahtung angeordnet sind, und angepasst ist, um ein Bild durch Bestrahlen von Phosphor mit einem durch die Elektronen-emittierenden Einrichtungen emittierten Elektronenstrahl anzuzeigen.

4. Vorrichtung nach Anspruch 1, wobei die Helligkeitsunterdrückungseinrichtung angepasst ist, um die Helligkeit durch Ändern einer Helligkeitskomponente eines Videosignals zu unterdrücken.

5. Vorrichtung nach Anspruch 1, wobei die Helligkeitsunterdrückungseinrichtung angepasst ist, um die Helligkeit durch Ändern einer Antriebsspannung von Elektronen-emittierenden Einrichtungen des Anzeigefelds zu unterdrücken.

6. Vorrichtung nach Anspruch 1, wobei die Helligkeitsunterdrückungseinrichtung angepasst ist, um die Helligkeit durch Ändern einer Beschleunigungsspannung zum Beschleunigen von Elektronen, die durch Elektronenemittierende Einrichtungen des Anzeigefelds emittiert sind, zu unterdrücken.

7. Vorrichtung nach Anspruch 3, wobei die Elektronen-emittierenden Einrichtungen Oberflächenleitungs-Elektronenemittierende Einrichtungen sind.

8. Bildanzeigesteuerverfahren mit den folgenden Schritten:

Erfassen eines Durchschnittsemissionsstroms, der einem Anzeigefeld (1) zugeführt wird, als Maß einer Durchschnittshelligkeit eines Anzeigebilds;

Erfassen eines Szeneübergangs;

Unterdrücken der Anzeigehelligkeit im Ansprechen auf den Durchschnittsemissionsstrom und eine Erfassung des Szeneübergangs,

wobei, wenn kein Szeneübergang erfasst wird, die Anzeigehelligkeit so gesteuert wird, um sich langsam zu ändern, und, wenn der Szeneübergang erfasst wird, die Anzeigehelligkeit so gesteuert wird, um sich schneller zu ändern, als wenn kein Szeneübergang erfasst wird,

und wobei ein Unterdrückungsgrad für die Anzeigehelligkeit auf einen niedrigen Wert eingestellt wird, falls die Durchschnittshelligkeit des Anzeigebilds hoch ist, und auf einen hohen Wert eingestellt wird, falls die Durchschnittshelligkeit des Anzeigebilds niedrig ist;

**dadurch gekennzeichnet, dass**

der Szeneübergang auf der Basis eines Änderungsbetrags des Durchschnittsemissionsstroms erfasst wird.

## Revendications

1. Dispositif de commande d'affichage d'image comprenant :

   un moyen (14) d'information de luminosité destiné à détecter un courant moyen d'émission fourni à un écran (1) d'affichage en tant que mesure de la luminosité moyenne d'une image d'affichage ; et

   un moyen (34) de détection destiné à détecter un changement de scène d'image ; et

   un moyen (7, 14, 21, 34) d'atténuation de luminosité qui est apte à atténuer la luminosité d'affichage en réponse à l'émission moyenne et à la détection d'un changement de scène,

   ledit moyen d'atténuation de luminosité étant apte à effectuer une commande de façon à changer lentement la luminosité d'affichage lorsque aucun changement de scène n'est détecté, et à effectuer une commande de façon à changer la luminosité d'affichage plus rapidement lorsqu'un changement de scène est détecté que lorsque aucun changement de scène n'est détecté, et

   ledit moyen d'atténuation de luminosité étant apte à fixer le degré d'atténuation pour la luminosité d'affichage à une valeur basse si la luminosité moyenne de l'image d'affichage est élevée, et à fixer le degré d'atténuation pour la luminosité d'affichage à une valeur élevée si la luminosité moyenne de l'image d'affichage est basse, **caractérisé en ce que** ledit moyen (34) de détection destiné à détecter un changement de scène d'image est apte à détecter ledit changement de scène d'image sur la base de l'importance de variation du courant moyen d'émission.

2. Dispositif selon la revendication 1, dans lequel ledit moyen de détection est apte à détecter le changement de scène sur la base d'une différence entre la luminosité moyenne d'une vue à laquelle on s'intéresse et la luminosité moyenne d'une vue précédant immédiatement.

3. Dispositif d'affichage comprenant un dispositif de commande d'affichage d'image selon la revendication 1, et l'écran d'affichage qui comprend une pluralité de dispositifs émetteurs d'électrons agencés en une matrice via un câblage de colonnes et un câblage de rangées, et qui est apte à afficher une image en projetant sur un luminophore un faisceau d'électrons émis par les dispositifs émetteurs d'électrons.

4. Dispositif selon la revendication 1, dans lequel ledit moyen d'atténuation de luminosité est apte à atténuer la luminosité en changeant une composante de luminosité d'un signal vidéo.

5. Dispositif selon la revendication 1, dans lequel ledit moyen d'atténuation de luminosité est apte à atténuer la luminosité en changeant la tension d'attaque des dispositifs émetteurs d'électrons de l'écran d'affichage.

6. Dispositif selon la revendication 1, dans lequel ledit moyen d'atténuation de luminosité est apte à atténuer la luminosité en changeant une tension d'accélération destinée à accélérer les électrons émis par les dispositifs émetteurs d'électrons de l'écran d'affichage.

7. Dispositif selon la revendication 3, dans lequel les dispositifs émetteurs d'électrons sont des dispositifs émetteurs d'électrons à conduction de surface.

8. Procédé de commande d'affichage d'image comprenant :

la détection d'un courant moyen d'émission fourni à un écran (1) d'affichage en tant que mesure de la luminosité moyenne d'une image d'affichage ;

la détection d'un changement de scène ;

l'atténuation de la luminosité d'affichage en réponse au courant moyen d'émission et à la détection du changement de scène,

dans lequel, lorsque aucun changement de scène n'est détecté, la luminosité d'affichage est commandée de façon à varier lentement, et lorsque le changement de scène est détecté, la luminosité d'affichage est commandée de façon à varier plus rapidement que lorsque aucun changement de scène n'est détecté,

et dans lequel le degré d'atténuation pour la luminosité d'affichage est fixé à une valeur basse si la luminosité moyenne de l'image d'affichage est élevée, et est fixé à une valeur élevée si la luminosité moyenne de l'image d'affichage est basse ;

**caractérisé en ce que** ledit changement de scène est détecté sur la base de l'importance de variation du courant moyen d'émission.

# FIG. 1

EP 1 310 935 B1

# FIG. 2

FRAME F1

FRAME F2

INPUT VIDEO SIGNAL : S1

F1 INPUT VIDEO SIGNAL

F2 INPUT VIDEO SIGNAL

A/D CONVERSION : 3

A/D CONVERSION : 3

DIGITAL VIDEO SIGNAL : S2

F1 DIGITAL VIDEO SIGNAL

FRAME MEMORY WRITE

FRAME MEMORY WRITE : S3

F1 DIGITAL VIDEO SIGNAL

FRAME MEMORY READ OUT : S4

F0 DIGITAL VIDEO SIGNAL

F1 DIGITAL VIDEO SIGNAL

FRAME MEMORY READ OUT

AVERAGE BRIGHTNESS CALCULATION : 33

FRAME MEMORY READ OUT

FRAME AVERAGE BRIGHTNESS : S6

F1 AVERAGE BRIGHTNESS

ABL CALCULATION : 34

BRIGHTNESS SUPPRESSION COEF. : S9

F1 BRIGHTNESS SUPPRESSION COEF.

BRIGHTNESS ADJUSTMENT

DISPLAY SIGNAL : S10

F0 DISPLAY SIGNAL

F1 DISPLAY SIGNAL

DISPLAY

DISPLAY

EP 1 310 935 B1

# FIG. 3

```
         ( VERTICAL SYNC. SIGNAL )
                    │
                    ▼
         ┌──────────────────────┐  S101
         │  AVERAGE  BRIGHTNESS │
         │  INPUT               │
         └──────────────────────┘
                    │
                    ▼
         ┌──────────────────────┐  S102
         │  CALCULATION  FOR    │
         │  DIFFERENTIAL  OF AVERAGE │
         │  BRIGHTNESS          │
         └──────────────────────┘
                    │
                    ▼
         ┌──────────────────────┐  S103
         │  CALCULATION  FOR    │
         │  NORMAL  VALUE  OF   │
         │  BRIGHTNESS SUPPRESSION │
         │  COEF.               │
         └──────────────────────┘
                    │
                    ▼
                  S104
              ╱  SCENE  ╲                NO
         ◄  CHANGEOVER TAKE  ►──────────────────┐
              ╲  PLACE ?  ╱                      │
                  │ YES      S105               S106
                  ▼                              ▼
    ┌──────────────────────┐        ┌──────────────────────┐
    │ CALCULATION  FOR     │        │ CALCULATION  FOR     │
    │ BRIGHTNESS SUPPRESSION│        │ BRIGHTNESS SUPPRESSION│
    │ COEF.  IN  SCENE     │        │ COEF.  IN  CONTINUOUS │
    │ CHANGEOVER           │        │ SCENE                │
    └──────────────────────┘        └──────────────────────┘
                  │                              │
                  ▼◄─────────────────────────────┘
    ┌──────────────────────┐  S107
    │ OUTPUT  OF  BRIGHTNESS│
    │ SUPPRESSION  COEF.    │
    └──────────────────────┘
                  │
                  ▼
              ( END )
```

*FIG. 4A*

AVERAGE BRIGHTNESS

BRIGHTNESS REFERENTIAL VALUE

TIME

*FIG. 4B*

DIFFERENTIAL OF AVERAGE BRIGHTNESS

TIME

*FIG. 4C*

BRIGHTNESS SUPPRESSION COEF.

1

0

TIME

EP 1 310 935 B1

FIG. 4D

FIG. 4E

## FIG. 5A

## FIG. 5B

## FIG. 6

EP 1 310 935 B1

# FIG. 7

# FIG. 8

## FIG. 9

## FIG. 10

FIG. 11

EP 1 310 935 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000250463 A
- EP 0965974 A
- JP 2000330505 A